# EUROPEAN PATENT SPECIFICATION

(11) **EP 2 035 227 B1**
(45) Date of publication and mention of the grant of the patent: **01.08.2012**
(21) Application number: 07798860.8
(22) Date of filing: 21.06.2007
(51) Int. Cl.: B32B 27/36, B32B 27/08, B32B 7/12, B32B 27/30, B42D 15/10

(54) **MULTILAYER OPTICAL FILM, METHOD OF MAKING THE SAME, AND TRANSACTION CARD HAVING THE SAME**
MEHRSCHICHTIGER OPTISCHER FILM, VERFAHREN ZU SEINER HERSTELLUNG UND DIESEN ENTHALTENDE TRANSAKTIONSKARTE
FILM OPTIQUE MULTICOUCHE, PROCÉDÉ DE FABRICATION DE CELUI-CI, ET CARTE DE TRANSACTION L'INCORPORANT

(30) Priority: 23.06.2006 US 816236 P; 15.06.2007 US 763622
(43) Date of publication of application: 18.03.2009
(73) Proprietor: 3M Innovative Properties Company, St. Paul, MN 55133-3427 (US)
(72) Inventor: LIU, Richard Y., Saint Paul, Minnesota 55133-3427 (US); HEBRINK, Timothy J., Saint Paul, Minnesota 55133-3427 (US); JOHNSON, Stephen A., Saint Paul, Minnesota 55133-3427 (US); NORTH, Diane, Saint Paul, Minnesota 55133-3427 (US)
(74) Representative: Vossius & Partner
(86) International application number: PCT/US2007/071728
(87) International publication number: WO 2007/149955

(56) References cited:
- US-A1- 2004 076 844
- US-A1- 2005 259 326
- US-B1- 6 585 939
- US-B2- 6 790 526
- US-B2- 6 908 760

## Description

### Cross Reference to Related Application

This application claims the benefit of U.S. Provisional Application No. 60/816236 (Liu et al.), filed June 23, 2006, and U.S. Application Number 11/763,622, (Liu et al.), filed June 15, 2007.

### Field of the Invention

A multilayer optical film comprising alternating optical layers and method of making the same are disclosed. The multilayer optical film may be used, for example, in reflective films and transaction cards such as those intended for personal use.

### Background

Multilayer optical films are used in a wide variety of applications. One particular use of multilayer optical films is in mirrors and polarizers that reflect light of a given polarization and wavelength range. Such reflective films are used, for example, in conjunction with backlights in liquid crystal displays to enhance brightness and reduce glare, and in articles, such as sunglasses, to reduce light intensity and glare. Multilayer optical films may also be used as IR filters in transaction cards in order to make them readable by card reading machines such as ATMs.

One type of polymer that is useful in making multilayer optical films is a polyester. One example of a polyester-based multilayer optical film includes a stack of polyester layers of differing composition. One configuration of this stack of layers includes a first set of birefringent layers and a second set of layers with an isotropic index of refraction. The second set of layers alternates with the birefringent layers to form a series of interfaces for reflecting light. The multilayer optical film may also include one or more non-optical layers which, for example, cover at least one surface of the stack of layers to prevent damage to the stack during or after processing. Other configurations of layers are also known.

There is a need for the development of polyester-based multilayer optical films suitable for use in applications such as transaction cards and that have improved mechanical properties.

### Summary

In one aspect, a multilayer optical film is disclosed and comprises alternating layers of first and second optical layers, wherein the multilayer optical film comprises from 50 to 1000 optical layers; the first optical layer comprising a first polyester, wherein the first polyester comprises first dicarboxylate monomers and first diol monomers, and from 0.25 to less than 10 mol % of the first dicarboxylate monomers have pendant ionic groups, wherein the pendant ionic group comprises a sulfonate, phosphonate, or carboxylate group, or a combination thereof ; the second optical layer comprising a second polyester; and wherein the first and second optical layers have refractive indices along at least one axis that differ by at least 0.04. In some embodiments, the multilayer film comprises a polarizer film, a reflective polarizer film, a diffuse blend reflective polarizer film, a diffuser film, a brightness enhancing film, a turning film, a mirror film, or a combination thereof.

In another aspect, a transaction card is disclosed and comprises first and second polymer layers each having a thickness of at least about 125 µm; and a multilayer optical film of the present invention disposed between the first and second polymer layers ; wherein the transaction card has an average transmission of at least 50% from 400 to 700 nm, wherein the transmittance is measured according ASTM D-1003 using a hazeguard® instrument from BYK-Garnu USA. In some embodiments, the transaction card comprises a financial transaction card, an identification card, a key card, or a ticket card.

In another aspect, a method of making a multilayer optical film of the present invention is disclosed and comprises: coextruding alternating layers of first and second optical layers; preheating the coextruded alternating layers to a preheating temperature above the Tg of the first and second optical layers; stretching the coextruded alternating layers after preheating, such that the first and second optical layers have refractive indices along at least one axis that differ by at least 0.04.

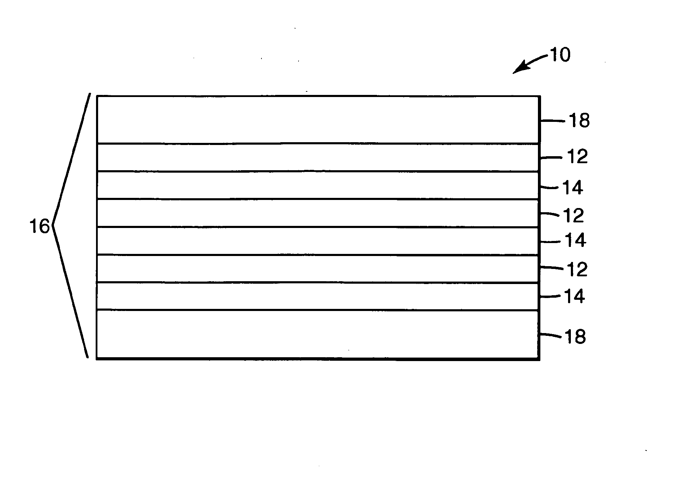

These and other aspects of the invention are described in the detailed description in conjunction with the drawing presented below. In no event should the above summary be construed as a limitation on the claimed subject matter which is defined solely by the claims as set forth.herein.

### Brief Descriptions of Drawing

The Figure is a cross-sectional view of an exemplary multilayer optical film.

### Detailed Description

The present invention relates to multilayer optical films such as the exemplary one shown in the Figure. Multilayer optical film 16 comprises alternating layers of first and second optical layers, 12 and 14 respectively. In general, the first and second optical layers have different refractive index characteristics so that some light is reflected at interfaces between adjacent layers. The layers are sufficiently thin so that light reflected at a plurality of the interfaces undergoes constructive or destructive interference in order to give the film the desired reflective or transmissive properties. For multilayer optical films designed to reflect light at ultraviolet, visible, or near-infrared wavelengths, each layer generally has an optical thickness (i.e., a physical thickness multiplied by refractive index) of less than about 1 µm. Thus, in one embodiment, the first and second optical layers each have a thickness of less than about 1 µm. Thicker layers can, however, also be included, such as skin layers on the outer surfaces of the film, or protective boundary layers disposed within the film that separate packets of optical layers. The Figure also depicts exemplary multilayer optical film 10 which includes layers 18 on the outer surfaces of multilayer optical film 16. The multilayer optical film disclosed herein comprises from 50 to 1000 optical layers, and preferably from 50 to 700 optical layers.

The multilayer optical film disclosed herein may comprise a polarizer film, a reflective polarizer film, a diffuse blend reflective polarizer film, a diffuser film, a brightness enhancing film, a turning film, a mirror film, or a combination thereof. Multilayer optical films are described, for example, in US 6,352,761 B1 (Hebrink et al.); US 7,052,762 B2 (Hebrink et al.); US 6,641,900 B2 (Hebrink et al.); US 6,569,515 B2 (Hebrink et al.); and US 2006/0226561 A1 (Mcrrill et al.) .

The multilayer optical film disclosed herein provides numerous advantages. For one, the multilayer optical film exhibits increased interlayer adhesion between the optical layers as compared to multilayer optical films known in the art. Interlayer adhesion may be described as peel strength and delamination resistance. With increased interlayer adhesion, delamination of the layers is reduced or can even be eliminated below a minimum desired peel strength, which is typically dependent on the application in which the multilayer optical film will be used. Thus, the multilayer optical film disclosed herein can be used in applications that require high peel strength such as in transaction cards for information storage. The multilayer optical film disclosed herein exhibits an average peel strength of at least about 0.34 N/mm (~2 lbs/in) when measured as described in International Standard ISO/IEC 10373-1:1998(E), the standard that defines test methods for characteristics of transaction cards as well as criteria for acceptability. The multilayer optical film disclosed herein exhibits an average 90 degree peel strength of at least about 0.038 N/mm (39 g/cm).

The multilayer optical film disclosed herein is also advantageous in that sufficient optical performance of the film can be maintained in combination with increased interlayer adhesion. As described in the references cited above, multilayer optical films are typically coextruded and subsequently oriented by drawing or stretching in one or two directions. One way to improve interlayer adhesion is to decrease the draw ratio, i.e., the degree to which the film is stretched. This approach utilizes the concept that the interphase thickness is proportional to the overall film thickness. Therefore, less film thickness reduction can result in an increased interphase thickness and more entanglements across the interphase. If the draw ratio is too small, however, problems with optical performance can result. For example, a decrease in optical gain may be observed if too little birefringence develops during orientation of the film. For another example, optical artifacts such as lack of interference may be observed because an interphase that is too thick often makes the index gradient fuzzy and gradual instead of sharp. The multilayer optical film disclosed herein can be drawn at a ratio sufficient to impart the desired optical properties to the film without having a detrimental affect on interlayer adhesion.

Another way to improve the interlayer adhesion of a multilayer optical film is to heat set the film after it has been stretched. Interlayer adhesion is thought to increase because heat can aid the release of internal stress built up in the film during stretching, or because it may result in transesterification reactions and/or interdiffusion between layers. Heat setting, however, can often affect the optical performance and mechanical integrity of a multilayer optical film. Compared to multilayer films known in the art, the multilayer optical film disclosed herein can be heat set at a lower temperature without having a detrimental affect on optical performance.

The multilayer optical film disclosed herein is also advantageous in that high shrinkage of the film can be maintained in combination with increased interlayer adhesion. High shrinkage can facilitate lamination of the film without wrinkling which is particularly advantageous in applications where the multilayer optical film is laminated with other less shrinkable polymers such as polyvinyl chloride, polycarbonate, and like polymers. Thermal processing of the laminate may cause buckling if the shrinkage of the optical film is significantly less than the dissimilar polymer. There is typically a trade-off between interlayer adhesion and shrinkage because shrinkage of a film is associated with internal stress, and internal stress is in part responsible for the generally poor interlayer adhesion in multilayer films.

The multilayer optical film disclosed herein also provides the advantage of being water resistant compared to multilayer optical films known in the art. This is unexpected because the multilayer optical films dislosed herein comprise polymers that can absorb more water compared to polymers used to make films known in the art. For example, the multilayer optical film disclosed herein can be submerged in water for an extended period of time, yet maintain clarity and good integrity. Overall, the multilayer optical film disclosed herein is advantageous because it can be designed to meet clarity, haze, and transmission characteristics depending on the application. For one, the multilayer optical film has a haze value of less than 50%.

The multilayer optical film disclosed herein comprises alternating layers of first and second optical layers made from first and second polyesters. As used herein, the term polyester refers to polyesters made from a single dicarboxylate monomer and a single diol monomer and also to copolyesters which are made from more than one dicarboxylate monomer and/or more than one diol monomer. In general, polyesters are prepared by condensation of the carboxylate groups of the dicarboxylate monomer with hydroxyl groups of the diol monomer.

The first polyester comprises first dicarboxylate monomers having pendant ionic groups. Pendant ionic groups are groups that do not participate in polymerization reactions which form the main backbone of the polyester. Although not wishing to be bound by theory, it is believed that interlayer adhesion increases as a result of the pendant ionic groups in one layer interacting with polar groups such as carbonyl oxygens in an adjacent layer; it is also possible that the pendant ionic groups in one layer interact with counterions present in an adjacent layer.

Volume density of ionic groups can be calculated for a given interphase according to Liu et al. in Macromolecules, 2005, 38, 4819-4827. Assuming an interphase thickness of 10 nm and a radius of entanglement of 2 nm, the volume density of interphase entanglements for two polymeric layers is about 3.0x10¹³/cm². With 0.5 mol% of a dicarboxylate monomer having a pendant ionic group, there are about 1.4x10¹³/cm² ionic groups at the interphase, which is roughly half of the number of interphase entanglements. With 5 mol% of a dicarboxylate monomer having a pendant ionic group, there are about 1.4 x 10¹⁴/cm² ionic groups at the interphase, which is about 4-5 times that of the number of interphase entanglements. Thus, a small amount of first dicarboxylate monomer having pendant ionic groups may be used.

The first dicarboxylate monomers comprise at least two different monomers and 0.25 to less than 10 mol% of the monomers have pendant ionic groups. In one embodiment, the first dicarboxylate monomers comprise at least two different monomers and 0.25 to 4 mol% of the monomers have pendant ionic groups. The particular mol% of monomers having pendant ionic groups is not particularly limited within the foregoing ranges and can be selected depending on the desired properties of the film. This, in turn, depends on the other monomers used to form the first polyester, as well as the monomers used to form the second polyester. Typically, a minimum peel strength which depends on the application is desired, as well as a minimum amount of water resistance. The particular mol% of monomers having pendant ionic groups should be selected such that there are no incompatibility issues in the melt either before or after it is coextruded, and the rheology of the melt must be amenable to the particular coextrusion method used to form the layers.

By keeping the mol% of pendant ionic groups below 10 mol%, several problems can be alleviated: For example, the polyester has less tendency to absorb moisture which can be difficult to remove during melt processing. The presence of moisture in the polyester can lead to undesirable rheological behavior that makes extrusion difficult. In addition, moisture can cause thickness variations in the extruded layer and these variations are detrimental to optical performance. Yet another advantage is that moisture sensitivity of the film is reduced. Also, keeping the amount of pendant ionic groups low facilitates formation of long polymeric chains which can be essential for good film formation. Otherwise, if the chains are too short, the resulting films can be brittle.

The first dicarboxylate monomers may comprise any dicarboxylate monomers known for preparing polyesters used in optical applications. As used herein, the terms "carboxylate" and "acid" are used interchangeably and include lower alkyl esters having from 1 to 10 carbon atoms. Examples of first dicarboxylate monomers include naphthalene dicarboxylic acid; terephthalate dicarboxylic acid; phthalate dicarboxylic acid; isophthalate dicarboxylic acid; (meth)acrylic acid; maleic acid; itaconic acid; azelaic acid; adipic acid; sebacic acid; norbornene dicarboxylic acid; bi-cyclooctane dicarboxylic acid; 1,6-cyclohexane dicarboxylic acid; t-butyl isophthalic acid; tri-mellitic acid; 4,4'-biphenyl dicarboxylic acid; or combinations thereof; and which may be substituted by its dimethyl ester form.

Any of the aforementioned dicarboxylic acid groups may be substituted with an ionic group in order to provide the pendant ionic groups. The pendant ionic groups may be introduced by grafting them onto side chains of a polyester, capping as end groups of a polyester, or including monomers having pendant ionic groups during polymerization to form the first polyester. The pendant ionic groups are anionic and comprise sulfonate, phosphonate, or carboxylate groups, or a combination thereof. Examples of cationic groups include ammonium and sulfonium groups. The first dicarboxylate monomer having the pendant ionic group may comprise one or more dicarboxylate monomers having the same or different pendant ionic groups. Each pendant ionic group is associated with a counterion which may be an inorganic or an organic counterion. Examples of inorganic counterions include sodium, potassium, lithium, zinc, magnesium, calcium, cobalt, iron, aluminum, or antimony counterions, or a combination thereof. Examples of organic counterions include C2 -C20 compounds, especially carboxylates. Preferred organic counterions include citrates, malates, malonates, maleates, adipates, succinates, acetates, propionates, lactates, tartrates, glycolates and combinations thereof. A useful first dicarboxylate monomer with a pendant ionic group comprises a salt of 5-sulfoisophthalate such as sodium 5-sulfoisophthalate.

The first diol monomer may comprise one or more diol monomers, and they may be any of those used to make polyesters for optical applications. Useful diol monomers also include those having more than two hydroxyl groups, for example, triols, tetraols, and pentaols, may also be useful. In general, aliphatic diols and glycols are useful; examples include 1,6-hexanediol; 1,4-butanediol; trimethylolpropane; 1,4-cyclohexanedimethanol; 1,4-benzenedimethanol; neopentyl glycol; ethylene glycol; propylene glycol; polyethylene glycol; tricyclodecanediol; norbornane diol; bicyclo-octanediol; pentaerythritol; bisphenol A; and 1,3-bis(2-hydroxyethoxy)benzene.

In one embodiment, the first polyester may comprise derivatives of polyethylene naphthalate (PEN) which comprises naphthalene dicarboxylate and ethylene glycol. The derivatives are obtained by replacing naphthalene dicarboxylate with a salt of 5-sulfoisophthalate such that the total number of first dicarboxylate monomers is the same. In one particular example, the first polyester may comprise naphthalene dicarboxylate and a salt of 5-sulfoisophthalate; and the first diol monomers comprise ethylene glycol. For example, the first polyester may comprise 2 mol% of sodium 5-sulfoisophthalate and 98 mol% of naphthalene dicarboxylate to 100 mol% of ethylene glycol. For another example, the first polyester may comprise 5 mol% of sodium 5-sulfoisophthalate and 95 mol% of naphthalene dicarboxylate to 100 mol% of ethylene glycol.

In another embodiment, the first polyester may comprise derivatives of CoPEN which comprises naphthalene dicarboxylate, terephthalate, and one or more diol monomers. The derivatives are obtained by replacing naphthalene dicarboxylate and/or terephthalate with a salt of dimethyl 5-sulfoisophthalate such that the total number of first dicarboxylate monomers is the same. In one example, the first dicarboxylate monomers may comprise naphthalene dicarboxylate, terephthalate, and a salt of 5-sulfoisophthalate; and the first diol monomers may comprise one or more monomers selected from the group consisting of ethylene glycol, 1,6-hexanediol, neopentylglycol, and trimethylol propane. For example, the first dicarboxylate monomers may comprise sodium 5-sulfoisophthalate, naphthalene dicarboxylate, and terephthalate; and the first diol monomers may comprise ethylene glycol and 1,6-hexanediol. For another example, the first dicarboxylate monomers may comprise 3-5 mol% sodium 5-sulfoisophthalate, 75 mol% naphthalene dicarboxylate, and 20-22 mol% terephthalate; and the first diol monomers may comprise 80-92 mol% ethylene glycol and 8-20 mol% 1,6-hexanediol.

In another embodiment, the first polyester may comprise derivatives of polyethylene terephthalate (PET) which comprises terephthalate and ethylene glycol. The derivatives are obtained by replacing terephthalate with a salt of 5-sulfoisophthalate such that the total number of first dicarboxylate monomers is the same. For example, the first dicarboxylate monomers may comprise a salt of 5-sulfoisophthalate and terephthalate; and the first diol monomers may comprise one or more monomers selected from the group consisting of ethylene glycol and neopentylglycol. For another example, the first polyester may comprise less than 10 mol% soldium salt of 5-sulfoisophthalate and at least 90 mol% terephthalate; and the first diol monomers may comprise 70-75 mol% ethylene glycol and 25-30 mol% neopentylglycol.

The first optical layer may comprise other polymers in addition to the first polyester comprising pendant ionic groups. Typically, the other polymers do not have pendant ionic groups. For example, the first optical layer may comprise a blend of the first polyester and another polyester. Particularly, the first polyester may comprise a salt of 5-sulfoisophthalate, terephthalate, ethylene glycol, and neopentylglycol; and the second polyester may comprise terephthalate, ethylene glycol, and neopentylglycol. In this case, the first and second polyesters may be blended in a ratio of from 5 to 95, respectively, or from 80 to 20.

The first optical layer may comprise additional components such as one or more catalysts and/or stabilizers. For example, the first optical layer may comprise acetates or oxides of metals selected from the group consisting of beryllium, sodium, magnesium, calcium, strontium, barium, boron, aluminum, gallium, manganese, cobalt, zinc, and antimony. For another example, the first optical layer may comprise one or more phosphorus compounds such as phosphoric acid or trimethyl phosphate. The first optical layer may comprise less than 0.5 wt%, or less than 0.1 wt%, of one or more catalysts and/or stabilizers. In particular, the first polyester may comprise about 0.5 wt % or less of a monovalent organic salt.

The multilayer optical film comprises second optical layer comprising a second polyester. The second polyester may have no pendant ionic groups. For example, the second dicarboxylate monomers may comprise naphthalene dicarboxylate; and the second diol monomers may comprise ethylene glycol. For another example, the second dicarboxylate monomers may comprise terephthate and the second diol monomers may comprise ethylene glycol and neopentyl glycol. For another example, the second dicarboxylate monomers may comprise naphthalene dicarboxylate and terephthalate; and the second diol monomers may comprise ethylene glycol. The second polyester may have pendant ionic groups, i.e., the second polyester may comprise second dicarboxylate monomers and second diol monomers, and from about 0.25 to less than 10 mol % of the second dicarboxylate monomers have pendant ionic groups. As described for the first optical layer, the second optical layer may comprise other polymers in addition to the second polyester. The second optical layer may also comprise additional components as described for the first optical layer.

Particular combinations of first and second optical layers are useful. For example, the first optical layer may comprise a blend of a first polyester comprising a salt of 5-sulfoisophthalate, terephthalate, and ethylene glycol; and another polyester comprising terephthalate and ethylene glycol; and the second optical layer may comprise a second polyester comprising naphthalene dicarboxylate, terephthalate, and ethylene glycol. For another example, the first optical layer may comprise a first polyester comprising a salt of 5-sulfoisophthalate, terephthalate, and ethylene glycol; and the second optical layer may comprise a second polyester comprising naphthalene dicarboxylate, terephthalate, and ethylene glycol. For another example, the first optical layer may comprise a first polyester comprising a salt of 5-sulfoisophthalate, naphthalene dicarboxylate, and ethylene glycol; and the second optical layer may comprise a second polyester comprising terephthalate, ethylene glycol, and neopentyl glycol.

In some embodiments, it may be beneficial to incorporate sodium ion into one or both optical layers in order to increase interlayer adhesion. The source of sodium ion may be a monomer, e.g., sodium 5-isophthalate, and/or an inorganic or organic salt such as sodium acetate. The multilayer optical film may be designed so that the first optical layer may comprise at least about 1000 ppm of sodium ion whereas the second optical layer contains no sodium ion. Synergistic effects may be achieved for a multilayer optical film wherein the first and second optical layers each comprise at least about 1000 ppm of sodium ion.

The multilayer optical film disclosed herein is suitable for use in optical applications in which light is managed, enhanced, manipulated, controlled, maintained, transmitted, reflected, refracted, absorbed, etc. For example, the optical article may be used in a graphic arts application, for example, backlit signs, billboards, and the like. The optical article may be used in a display device comprising, at the very least, a light source and a display panel. In this case, the optical article would typically have an area comparable to that of the display panel and would be positioned between the display panel and the light source. When the optical article is present in a display device, brightness at the display panel increases. The optical article may be used in display devices for other purposes, such as to diffuse light emitted by the light source, so that a viewer is less able to discern the shape, size, number, etc. of individual light sources, as compared to a display device in which the optical article is not used. The display panel may be of any type capable of producing images, graphics, text, etc., and may be mono- or polychromatic. Examples include a liquid crystal display panel, a plasma display panel, or a touch screen. The light source may comprise one light source or several individual light sources; examples include fluorescent lamps, phosphorescent lights, light emitting diodes, or combinations thereof. Examples of display devices include televisions, monitors, laptop computers, and handheld devices such as cell phones, PDA's, calculators, and the like.

A particular optical application in which the multilayer optical film may be used is in transaction cards as described in US 6,290,137 B1 (Kiekhaefer); US 2005/0040242 A1 (Beenau et al.); US 2005/259326 A1 (Weber et al.); and US 2006/0196948 A1 (Weber et al.).

Transaction cards are substantially flat, thin, stiff articles that are sufficiently small for personal use; examples include financial transaction cards (including credit cards, debit cards, and smart cards), identification cards, key cards, and ticket cards. A transaction card as defined above comprises first and second polymer layers each having a thickness of at least about 125 µm, and the multilayer optical film disclosed herein is disposed between the two layers. The first and second polymer layers can independently comprise polyvinylchloride, polyethylene terephthalate, polyethylene naphthalate, polycarbonate, polystyrene, styreneacrylonitrile, polymethylmethacrylate, glycol-modified polyethylene terephthalate, copolyester, or a combination thereof.

A particular type of transaction card is a visible light transmissive card, referred to herein as a VLT card, which has at least one area through which at least a portion of visible light is transmitted, which area has an average transmission of at least about 50% from 400 to 700 nm, more preferably at least about 70%. VLT cards are typically designed to substantially block most IR radiation such that at least one area of the card exhibits an average transmission of less than about 16% from 800 to 1000 nm. VLT cards can have a substantial amount of haze (and hence be translucent) and can be tinted or otherwise colored, such as by the incorporation of a dye or pigment, or by suitable placement of the reflection band of the multilayer optical film. VLT cards can also be substantially transparent and colorless, e.g., water-clear. In one embodiment, the transaction card with the multilayer optical film incorporated therein has a haze of less than about 12%. The multilayer optical film can be incorporated into a VLT card using adhesives, primers, and the like as described in the above-cited references.

The multilayer optical film disclosed herein is formed by coextrusion of the polymers as described above. Extrusion conditions are chosen to adequately feed, melt, mix, and pump the polymers as feed streams or melt streams in a continuous and stable manner. Temperatures used to form and maintain each of the melt streams are chosen to be within a range that reduces freezing, crystallization, or unduly high pressure drops at the low end of the range, and that reduces degradation at the high end. Preferably, the polymers of the various layers are chosen to have similar rheological properties (e.g., melt viscosities) so that they can be co-extruded without flow disturbances.

Each feed stream is conveyed through a neck tube into a gear pump used to regulate the continuous and uniform rate of polymer flow. A static mixing unit may be placed at the end of the neck tube to carry the melt streams from the gear pump into a feedblock with uniform melt stream temperature. The entire melt stream is typically heated as uniformly as possible to enhance both uniform flow of the melt stream and reduce degradation during melt processing.

If top and bottom layers comprise the same material, a multilayer feedblock may be used to divide the extrudable polymer into two melt streams, one for each of the top and bottom layers. The layers from any melt stream are created by sequentially bleeding off part of the stream from a main flow channel into side channel tubes which lead to layer slots in the feedblock manifold. The layer flow is often controlled by choices made in machinery, as well as the shape and physical dimensions of the individual side channel tubes and layer slots.

The downstream-side manifold of the feedblock is often shaped to compress and uniformly spread the layers of the combined multilayer stack transversely. The multilayer stack exiting the feedblock manifold may then enter a final shaping unit such as a single manifold die. The resulting web is then cast onto a chill roll, sometimes referred to as a casting wheel or casting drum. This casting is often assisted by the use of a nip roll. In general, the web is cast to a uniform thickness across the web but deliberate profiling of the web thickness may be induced by die lip controls. Alternatively, a multi-manifold extrusion die may be used to spread and combine the layers prior to casting.

After cooling, the multilayer web is drawn or stretched to produce the multilayer optical film; details related to drawing methods and processes can be found in the references cited above. In one exemplary method for making a polarizer, a single drawing step is used. This process may be performed in a tenter or a length orienter. Typical tenters draw transversely to the web path, although certain tenters are equipped with mechanisms to draw or relax (shrink) the film dimensionally in the web path or machine direction. Thus, in this exemplary method, a film is drawn in one in-plane direction. The second in-plane dimension is either held constant as in a conventional tenter, or is allowed to neck in to a smaller width as in a length orienter. Such necking in may be substantial and increase with draw ratio.

In another exemplary method for making a polarizer, sequential drawing steps are used. This process may be performed in a length orienter and/or a tenter. Typical length orienter draws in the web path direction while a tenter draws transversely to the web path. In one exemplary method, a film is drawn sequentially in both in-plane directions in a roll-to-roll process. Yet in another exemplary method, a film is drawn simultaneously in both in-plane directions in a batch orienter. Yet in another exemplary method, a film is drawn in a batch orienter only in one direction while the width in the other direction is held constant.

In one exemplary method for making a mirror, a two step drawing process is used to orient the birefringent material in both in-plane directions. The draw processes may be any combination of the single step processes described above and that allow drawing in two in-plane directions. In addition, a tenter that allows drawing along the machine direction, e.g. a biaxial tenter which can draw in two directions sequentially or simultaneously, may be used. In this latter case, a single biaxial draw process may be used.

In still another method for making a polarizer, a multiple drawing process is used that exploits the different behavior of the various materials to the individual drawing steps to make the different layers comprising the different materials within a single coextruded multilayer film possess different degrees and types of orientation relative to each other. Mirrors can also be formed in this manner.

As described in the references cited above, the reflective and transmissive properties of the multilayer optical film disclosed herein are a function of the refractive indices of the respective layers. Each layer can be characterized at least in localized positions in the film by in-plane refractive indices nₓ, n_{y}, and a refractive index n_{z} associated with a thickness axis of the film. These indices represent the refractive index of the subject material for light polarized along mutually orthogonal x-, y-, and z-axes, respectively. In practice, the refractive indices are controlled by judicious materials selection and processing conditions.

The individual layers have thicknesses and refractive indices that are tailored to provide one or more reflection bands in desired region(s) of the spectrum, such as in the visible or near infrared. In order to achieve high reflectivities with a reasonable number of layers, adjacent nanolayers preferably exhibit a difference in refractive index (Δnₓ) for light polarized along the x-axis of at least 0.04. If the high reflectivity is desired for two orthogonal polarizations, then the adjacent nanolayers also preferably exhibit a difference in refractive index (Δn_{y}) for light polarized along the y-axis of at least 0.04.

Prior to stretching, the multilayer web is preheated to a preheating temperature above the Tg of the first and second optical layers. The pre-heated web is then stretched to a draw ratio of from 2x2 to 6x6, more preferably from 3x3 to 4x4. After stretching, the resulting multilayer optical film may be post-heated for at least 5 seconds, more preferably at least 20 seconds. Post-heating comprises heating at a pre-set temperature of from 180 to 250°C, for example, at a temperature of at least 204°C, or from 204 to 250°C, and preferably from 220 to 240°C. In one of the embodiment, the multilayer film was post-heated at 227°C. In another embodiment, the multilayer film was post-heated at 240°C.

The following examples are for illustration and are not meant to limit the scope of the invention in any way.

### Examples

### Preparation of Copolyesters

### Polyester A

Polyester A comprised polyethylene naphthalate homopolymer (PEN) in which the diacid moieties result from use of naphthalene dicarboxylic acid or its esters, and the diol moieties result from use of ethylene glycol. Polyester A was made as follows: A batch reactor was charged with 136 kg dimethyl naphthalene dicarboxylate, 73 kg ethylene glycol, 27 g manganese(II) acetate, 27 g cobalt(II) acetate, and 48 g antimony(III) acetate. Under pressure of 138 kPa (20 psig) this mixture was heated to 254°C with removal of the esterification reaction by-product, methanol. After 35 kg of methanol was removed, 49 g of triethyl phosphonoacetate was charged to the reactor and the pressure was then gradually reduced to below 1.33 kPa while heating to 290°C. The condensation reaction by-product, ethylene glycol, was continuously removed until a polymer with an intrinsic viscosity of 0.48 dL/g, as measured in 60/40 wt.% phenol/o-dichlorobenzene at 23°C, was produced.

### Polyester B

Polyester B was an ethylene naphthalate-based copolyester in which 2 mol% of the diacid moieties result from use of sodium sulfoisophthalic acid or its esters, 98 mol% of the diacid moieties result from use of naphthalene dicarboxylic acid or its esters, and the diol moieties result from use of ethylene glycol. Polyester B was made as follows: A batch reactor was charged with 138 kg dimethyl naphthalene dicarboxylate, 3.4 kg dimethyl sodium sulfoisophthalate, 78 kg ethylene glycol, 32 g zinc(II) acetate, 26 g cobalt(II) acetate, 131 g sodium acetate, and 68 g antimony(III) acetate. Under pressure of 138 kPa (20 psig), this mixture was heated to 254°C with removal of the esterification reaction by-product, methanol. After 38 kg of methanol was removed, 58 g of triethyl phosphonoacetate was charged to the reactor and the pressure was then gradually reduced to below 1.33 kPa while heating to 285°C. The condensation reaction by-product, ethylene glycol, was continuously removed until a polymer with an intrinsic viscosity of 0.37 dL/g, as measured in 60/40 wt.% phenol/o-dichlorobenzene at 23°C, was produced.

### Polyester C

Polyester C was an ethylene naphthalate-based copolyester in which 5 mol% of the diacid moieties result from use of sodium sulfoisophthalic acid or its esters, 95 mol% of the diacid moieties result from use of naphthalene dicarboxylic acid or its esters, and the diol moieties result from use of ethylene glycol. Polyester C was made as follows: A batch reactor was charged with 20.5 kg dimethyl naphthalene dicarboxylate, 1.3 kg dimethyl sodium sulfoisophthalate, 11.7 kg ethylene glycol, 2.4 g zinc(II) acetate, 2 g cobalt(II) acetate, 19.6 g sodium acetate, and 10.9 g antimony(III) acetate. Under pressure of 138 kPa (20 psig) this mixture was heated to 254°C with removal of the esterification reaction by-product, methanol. After 5 kg of methanol was removed, 4.4 g of triethyl phosphonoacetate was charged to the reactor and the pressure was then gradually reduced to below 1.33 kPa while heating to 285°C. The condensation reaction by-product, ethylene glycol, was continuously removed until a polymer with an intrinsic viscosity of 0.31 dL/g, as measured in 60/40 wt.% phenol/o-dichlorobenzene at 23°C, was produced.

### Polyester D

Polyester D was an ethylene naphthalate-based copolyester in which 10 mol% of the diacid moieties result from use of sodium sulfoisophthalic acid or its esters, 90 mol% of the diacid moieties result from use of naphthalene dicarboxylic acid or its esters, and the diol moieties result from use of ethylene glycol. Polyester D was made as follows: A batch reactor was charged with 19.2 kg dimethyl naphthalene dicarboxylate, 2.6 kg dimethyl sodium sulfoisophthalate, 11.6 kg ethylene glycol, 2.4 g zinc(II) acetate, 2 g cobalt(II) acetate, 38.9 g sodium acetate, and 10.9 g antimony(III) acetate. Under pressure of 138 kPa (20 psig), this mixture was heated to 254°C with removal of the esterification reaction by-product, methanol. After 5 kg of methanol was removed, 4.4 g of triethyl phosphonoacetate was charged to the reactor and the pressure was then gradually reduced to below 1.33 kPa while heating to 285°C. The condensation reaction by-product, ethylene glycol, was continuously removed until a polymer with an intrinsic viscosity of 0.26 dL/g, as measured in 60/40 wt.% phenol/o-dichlorobenzene at 23°C, was produced.

### Polyester E

Polyester E was a copolyester in which 55 mol% of the diacid moieties result from use of naphthalene dicarboxylic acid or its esters and 45 mol% of the diacid moieties result from use of terephthalic acid or its esters, and the diol moieties result from use of a mixture of diols which includes 1,6-hexanediol. Polyester E was made as follows: A batch reactor was charged with 88.5 kg dimethyl 2,6-naphthalene dicarboxylate, 57.5 kg dimethyl terephthalate, 81 kg ethylene glycol, 4.7 kg 1,6-hexanediol, 239 g trimethylol propane, 22 g zinc(II) acetate, 15 g cobalt(II) acetate, and 51 g antimony(III) acetate. Under pressure of 138 kPa (20 psig), this mixture was heated to 254°C with removal of the esterification reaction by-product, methanol. After 39.6 kg of methanol was removed, 37 g of triethyl phosphonoacetate was charged to the reactor and the pressure was then gradually reduced to below 1.33 kPa while heating to 290°C. The condensation reaction by-product, ethylene glycol, was continuously removed until a polymer with an intrinsic viscosity of 0.56 dL/g, as measured in 60/40 wt.% phenol/o-dichlorobenzene at 23°C, was produced. The polymer produced by this method had a glass transition temperature (T_{g}) of 94°C as measured by differential scanning calorimetry at a temperature ramp rate of 20°C per minute.

### Polyester F

Polyester F was a copolyester in which all of the diol moieties result from use of ethylene glycol, 90 mol% of the diacid moieties result from use of naphthalene dicarboxylic acid or its esters, and 10 mol% of the diacid moieties result from the use of terephthalic acid or its esters. Polyester F was made as follows: A batch reactor was charged with 126 kg dimethyl naphthalene dicarboxylate, 11 kg dimethyl terephthalate, 75 kg ethylene glycol, 27 g manganese(II) acetate, 27 g cobalt(II) acetate, and 48 g antimony(III) acetate. Under pressure of 138 kPa (20 psig), this mixture was heated to 254°C with removal of the esterification reaction by-product, methanol. After 36 kg of methanol was removed, 49 g of triethyl phosphonoacetate was charged to the reactor and the pressure was then gradually reduced tobelow 1.33 kPa while heating to 290°C. The condensation reaction by-product, ethylene glycol, was continuously removed until a polymer with an intrinsic viscosity of 0.50 dL/g, as measured in 60/40 wt.% phenol/o-dichlorobenzene at 23°C, was produced.

### Polyester G

Polyester G was a naphthalate-based copolyester in which 3 mol% of the diacid moieties result from use of sodium sulfoisophthalic acid or its esters, 22 mol% of the diacid moieties result from the use of terephthalic acid or its esters, 75 mol% of the diacid moieties result from use of naphthalene dicarboxylic acid or its esters, 84 mol% of the diol moieties result from use of ethylene glycol, and 16 mol% of the diol moieties result from use of 1,6-hexanediol. Polyester G was made as follows: A batch reactor was charged with 108.8 kg dimethyl 2,6-naphthalenedicarboxylate, 25.4 kg dimethyl terephthalate, 5.3 kg dimethyl sodium sulfoisophthalate, 72.6 kg ethylene glycol, 11.2 kg 1,6-hexanediol, 15 g zinc(II) acetate, 13 g cobalt(II) acetate, 126 g sodium acetate, and 70 g antimony(III) acetate. Under pressure of 138 kPa (20 psig), this mixture was heated to 254°C with removal of the esterification reaction by-product, methanol. After 38 kg of methanol was removed, 28 g of triethyl phosphonoacetate was charged to the reactor and the pressure was then gradually reduced to below 1.33 kPa while heating to 285°C. The condensation reaction by-product, ethylene glycol, was continuously removed until a polymer with an intrinsic viscosity of 0.41 dL/g, as measured in 60/40 wt.% phenol/o-dichlorobenzene at 23°C, was produced.

### Polyester H

Polyester H was a naphthalate-based copolyester in which 5 mol% of the diacid moieties result from use of sodium sulfoisophthalic acid or its esters, 20 mol% of the diacid moieties result from the use of terephthalic acid or its esters, 75 mol% of the diacid moieties result from use of naphthalene dicarboxylic acid or its esters, 92 mol% of the diol moieties result from use of ethylene glycol, and 8 mol% of the diol moieties result from use of 1,6-hexanediol. Polyester H was made as follows: A batch reactor was charged with 110 kg dimethyl 2,6-naphthalenedicarboxylate, 23.2 kg dimethyl terephthalate, 8.9 kg dimethyl sodium sulfoisophthalate, 72.8 kg ethylene glycol, 5.7 kg 1,6-hexanediol, 16 g zinc(II) acetate, 13 g cobalt(II) acetate, 128 g sodium acetate, and 71 g antimony(III) acetate. Under pressure of 138 kPa (20 psig), this mixture was heated to 254°C with removal of the esterification reaction by-product, methanol. After 38 kg of methanol was removed, 28 g of triethyl phosphonoacetate was charged to the reactor and the pressure was then gradually reduced to below 1.33 kPa while heating to 285°C. The condensation reaction by-product, ethylene glycol, was continuously removed until a polymer exhibiting a typical melt viscosity for discharge from the reactor was produced.

### Polyester I

Polyester I was a naphthalate-based copolyester in which 10 mol% of the diacid moieties result from use of sodium sulfoisophthalic acid or its esters, 40 mol% of the diacid moieties result from the use of terephthalic acid or its esters, 50 mol% of the diacid moieties result from use of naphthalene dicarboxylic acid or its esters, 80 mol% of the diol moieties result from use of ethylene glycol, and 20 mol% of the diol moieties result from use of neopentyl glycol. Polyester I was made as follows: A batch reactor was charged with 75.8 kg dimethyl 2,6-naphthalenedicarboxylate, 48.2 kg dimethyl terephthalate, 18.4 kg dimethyl sodium sulfoisophthalate, 77 kg ethylene glycol, 12.9 kg neopentyl glycol, 0.1 kg trimethylol propane, 34 g zinc(II) acetate, 20 g cobalt(II) acetate, 150 g sodium acetate, and 60 g antimony(III) acetate. Under pressure of 138 kPa (20 psig), this mixture was heated to 254°C with removal of the esterification reaction by-product, methanol. After 38 kg of methanol was removed, 54 g of triethyl phosphonoacetate was charged to the reactor and the pressure was then gradually reduced to below 1.33 kPa while heating to 285°C. The condensation reaction by-product, ethylene glycol, was continuously removed until a polymer exhibiting a typical melt viscosity for discharge from the reactor was produced.

### Polyester J

Polyester J was Eastar® Copolyester 6763 commercially available from Eastman Chemical Company. Bastar® Copolyester 6763 is a glycol-modified PET and is believed to have no pendant ionic groups.

### Polyester K

Polyester K was a terephthalate-based copolyester in which 5 mol% of the diacid moieties result from use of sodium sulfoisophthalic acid or its esters, 95 mol% or the diacid moieties result from the use of terephthalic acid or its esters, 73 mol% of the diol moieties result from use of ethylene glycol, and 27 mol% of the diol moieties result from use of neopentyl glycol. Polyester K was made as follows: A batch reactor was charged with 146.6 kg dimethyl terephthalate, 11.8 kg dimethyl sodium sulfoisophthalate, 91.5 kg ethylene glycol, 22.7 kg neopentyl glycol, 16 g zinc(II) acetate, 16 g cobalt(II) acetate, 142 g sodium acetate, and 79 g antimony(III) acetate. Under pressure of 138 kPa (20 psig), this mixture was heated to 254°C with removal of the esterification reaction by-product, methanol. After 51 kg of methanol was removed, 29 g of triethyl phosphonoacetate was charged to the reactor and the pressure was then gradually reduced to below 1.33 kPa while heating to 275°C. The condensation reaction by-product, ethylene glycol, was continuously removed until a polymer with an intrinsic viscosity of 0.39 dL/g, as measured in 60/40 wt.% phenol/o-dichlorobenzene at 23°C, was produced.

### Polyester L

Polyester L was a terephthalate-based copolyester in which 10 mol% of the diacid moieties result from use of sodium sulfoisophthalic acid or its esters, 90 mol% or the diacid moieties result from the use of terephthalic acid or its esters, 73 mol% of the diol moieties result from use of ethylene glycol, and 27 mol% of the diol moieties result from use of neopentyl glycol. Polyester L was made as follows: A batch reactor was charged with 138.8 kg dimethyl terephthalate, 23.5 kg dimethyl sodium sulfoisophthalate, 91.5 kg ethylene glycol, 22.7 kg neopentyl glycol, 18 g zinc(II) acetate, 14 g cobalt(II) acetate, 146 g sodium acetate, and 81 g antimony(III) acetate. Under pressure of 138 kPa (20 psig), this mixture was heated to 254°C with removal of the esterification reaction by-product, methanol. After 51 kg of methanol was removed, 28 g of triethyl phosphonoacetate was charged to the reactor and the pressure was then gradually reduced to below 1.33 kPa while heating to 275°C. The condensation reaction by-product, ethylene glycol, was continuously removed until a polymer with an intrinsic viscosity of 0.25 dL/g, as measured in 60/40 wt.% phenol/o-dichlorobenzene at 23°C, was produced.

### Polyester M

Polyester M was a terephthalate-based copolyester in which 15 mol% of the diacid moieties result from use of sodium sulfoisophthalic acid or its esters, 85 mol% or the diacid moieties result from the use of terephthalic acid or its esters, 73 mol% of the diol moieties result from use of ethylene glycol, and 27 mol% of the diol moieties result from use of neopentyl glycol. Polyester M was made as follows: A batch reactor was charged with 108 kg dimethyl terephthalate, 28.2 kg dimethyl sodium sulfoisophthalate, 75 kg ethylene glycol, 18.6 kg neopentyl glycol, 15 g zinc(II) acetate, 12 g cobalt(II) acetate, 250 g sodium acetate, and 68 g antimony(III) acetate. Under pressure of 138 kPa (20 psig), this mixture was heated to 254°C with removal of the esterification reaction by-product, methanol. After 51 kg of methanol was removed, 22 g of triethyl phosphonoacetate was charged to the reactor and the pressure was then gradually reduced to below 1.33 kPa while heating to 275°C. The condensation reaction by-product, ethylene glycol, was continuously removed until a polymer with an intrinsic viscosity of 0.21 dL/g, as measured in 60/40 wt.% phenol/o-dichlorobenzene at 23°C, was produced.

### Polyester N

Polyester N was SA115 copolyester commercially available from Eastman Chemical Company. SA115 is believed to have no pendant ionic groups.

### Polyester O

Polyester O was a terephthalate-based copolyester in which 10 mol% of the diacid moieties result from use of sodium sulfoisophthalic acid or its esters, 10 mol% or the diacid moieties result from the use of terephthalic acid or its esters, 80 mol% or the diacid moieties result from the use of cyclohexane dicarboxylic acid or its esters, 30 mol% of the diol moieties result from use of ethylene glycol, and 70 mol% of the diol moieties result from use of cyclohexane dimethanol. Polyester O was made as follows: A batch reactor was charged with 11.3 kg dimethyl terephthalate, 17.3 kg dimethyl sodium sulfoisophthalate, 92.4 kg dimethyl cyclohexane dicarboxylate, 57.19 kg cyclohexane dimethanol, 42.73 kg ethylene glycol, 18 g zinc(II) acetate, 14 g cobalt(II) acetate, 146 g sodium acetate, and 81 g antimony(III) acetate. Under pressure of 138 kPa (20 psig), this mixture was heated to 254°C with removal of the esterification reaction by-product, methanol. After 38.3 kg of methanol was removed, 28 g of triethyl phosphonoacetate was charged to the reactor and the pressure was then gradually reduced to 1 torr (131 N/m²) while heating to 275°C. The condensation reaction by-product, ethylene glycol, was continuously removed until a polymer with an intrinsic viscosity of 0.55 dL/g, as measured in 60/40 wt.% phenol/o-dichlorobenzene at 23°C, was produced.

### Polyester P

Polyester P was a cyclo-aliphatic based copolyester in which 10 mol% of the diacid moieties result from use of sodium sulfoisophthalic acid or its esters, 90 mol% or the diacid moieties result from the use of cyclohexane dicarboxylic acid or its esters, 30 mol% of the diol moieties result from use of ethylene glycol, and 70 mol% of the diol moieties result from use of cyclohexane dimethanol. Polyester P was made as follows: A batch reactor was charged with 103.86 kg dimethyl cyclohexane dicarboxylate, 17.26 kg dimethyl sodium sulfoisophthalate, 42.7 kg ethylene glycol, 57.11 kg cyclohexane dimethanol, 15 g zinc(II) acetate, 12 g cobalt(II) acetate, 250 g sodium acetate, and 68 g antimony(III) acetate. Under pressure of 138 kPa (20 psig), this mixture was heated to 254°C with removal of the esterification reaction by-product, methanol. After 39 kg of methanol was removed, 22 g of triethyl phosphonoacetate was charged to the reactor and the pressure was then gradually reduced to 1 torr (131 N/m²) while heating to 275°C. The condensation reaction by-product, ethylene glycol, was continuously removed until a polymer with an intrinsic viscosity of 0.52 dL/g, as measured in 60/40 wt.% phenol/o-dichlorobenzene at 23°C, was produced.

### Test Methods

### Peel Strength Test Method A: ISO/IEC 10373-1 Standard

The film to be tested was primed on both surfaces with a sulfonated polyester (WB-54 available from 3M Co.) and then laminated using PVC adhesive of about 70-80 micrometers thickness (Transilwrap 3/1 ZZ from Transilwrap Co., Inc.) between two transparent PVC sheets each having a thickness of 250 micrometer. The resulting test specimen was about 760 micrometer thick. The laminated specimen was cut to transaction card dimensions (54 mm x 80 mm) in accordance with the ISO/IEC 7810 Standard. The peel strength of the transaction card-sized test specimen was then tested in accordance to ISO/IEC 10373-1 Standard. Average peel strength was reported. A peel strength of at least 0.34 N/mm (∼2 lbs/in) is acceptable according to ISO/IEC 10373-1 Standard.

### Peel Strength Test Method B: Laminate Bending

The multilayer film to be tested was primed on both surfaces with a sulfonated polyester (WB-54 available from 3M Co.) and then laminated with PVC adhesive of about 70-80 micrometers thickness (Transilwrap 3/1 ZZ from Transilwrap Co., Inc.) between two transparent PVC sheets each having a thickness of about 250 micrometer. The resulting laminated specimen was a five layer laminate sheet structure with a thickness of about 850 micrometer. A Carver compression molder was used for the lamination. The lamination temperature was set at 140°C. The lamination force was set at 44 kN (10,000 lbs) on the pressure gauge. Pressure was applied for 15 minutes.

The laminated specimen was cut into a 25.4 mm-wide, 150 mm-long strip. A sharp razor blade was used to gently cut, normal to the film plane, into the laminate strip specimen, so as to cut through the PVC sheet and into the layer of PVC adhesive on one side of the specimen, but so as to avoid cutting into the multilayer film. The specimen was then bent along the cut so as to cause the cut to propagate through the PVC adhesive to expose the multilayer film. The same sharp razor blade was then used to gently slide along the surface of the embedded multilayer film so as to ensure that the cut broke through some layers of the film. Care was taken to ensure that at no point did the cut proceed entirely through the film to the PVC adhesive on the other side. The strip was then bent along the cut until the specimen was bent at an angle greater than 90°, to promote cracking in each direction along the film plane within the multilayer film. A successfully delaminated specimen results in the presence of a portion of the multilayer film remaining on both sides of each of the propagated cracks. The presence of film on all crack surfaces can be confirmed by measuring index of refraction on the surfaces. For each film, 10 strip specimens were tested.

The peel strength level was qualitatively classified into 4 categories: A, B, C, and D. Level D peel strength was defined such that the test specimens failed within the multilayer film on all ten replicate tests. Level C peel strength was defined such that the test specimens failed within the multilayer film on three to nine of the ten replicate tests. Level B peel strength was defined such that the test specimens failed within the multilayer film on only one or two of the replicate tests. Level A peel strength was defined such that the test specimens did not fail within the multilayer film on any of the ten replicate tests.

### Peel Strength Test Method C: 90° Peel

The multilayer film to be tested was cut into a 25.4 mm wide strip specimen. The film strip specimen was adhered to a glass substrate (about 50mm x 150mm) using a double sided adhesive tape with identical width (Scotch® Tape #396 from 3M Co.). The adhesive tape is dispensed directly atop the entire multilayer film strip specimen and also adhered to the center portion of the glass substrate. Also, a length of the tape strip, at the end of the tape strip which is adhered to the additional length of the substrate, was left dangling, unadhered, so it could be gripped by hand. Peel (delamination) of the film was initiated by a sharp quick pull on this free end of the tape strip, with one's thumb firmly placed 0.635 cm (1/4 inch) from the leading edge of the film strip specimen, so to prevent peeling too much of the film strip specimen. The peel-initiated plaque was then loaded in a Slip/Peel Tester (Instrumentors, Inc.). The portion of the film strip specimen adhering to the tape strip was peeled away from the substrate at a 90° peel angle, at 2.54 cm/second, at 25°C and 50% relative humidity. The error in the measured peel strength was estimated to be typically not more than 20%.

For some specimens peel could not be initiated. The adhesion between the film surface and the adhesive tape was measured to be about 590 g/cm (1500 g/in). Therefore, a test specimen which cannot be peeled was deemed to have a peel strength value in excess of 590 g/cm (1500 g/in).

### Water Treatment Test

The multilayer films were submerged in water at 23°C for 215 hours. Haze and film integrity were qualitatively assessed. In general, a film with good integrity is suitable for use in optical applications.

### Transmittance, Haze, and Clarity

The multilayer films were tested for Transmittance (T, %), Haze (H, %), and Clarity (C, %) using a Hazeguard® instrument from BYK-Garner USA. Transmittance and haze were measured according to ASTM D-1003. Clarity was measured according to the test methods described in the manual for the instrument.

### Examples 14 (Examples 1-4 are Reference Examples)

For Examples 2-4, coextruded films containing 3 layers were made on a pilot extrusion line using a 3-layer ABA (skin/core/skin) feedblock. The Layer A polymer was Polyester F, and was fed by a single screw extruder to the skin channel of the feedblock. The Layer B polymer was a pellet blend of Polyester J and Polyester K, which was fed by a twin screw extruder to the core channel of the feedblock. For Examples 2-4 respectively, the Polyester J:Polyester K ratios were 75:25, 50:50, and 25:75. Because polyesters transesterify during extrusion, the mole percentages of sodium sulfoisophthalic acid or its esters in Layer B were roughly equivalent to 1.25, 2.5, and 3.75 for Examples 2-4, respectively. The feed ratio for skin/core/skin was 1:1:1 by volume. The total extrusion rate was 13.6 kg/hr (30 lbs/hr). The extrudate was cast with a film die onto a chill roll to make cast web. Specimens of the cast web were then stretched biaxially at 140°C at a rate of 100%/second to stretch ratios of 3.6 x 3.6 in a KARO IV batch stretching machine (Brückner Maschinenbau, Siegsdorf, Germany). The films were not heat set, neither in the KARO IV nor subsequently. Example 1 is a film prepared as described above except that the mole percentage of sodium sulfoisophthalic acid or its esters in Layer B is roughly equivalent to 0.25. The peel strength for this film is interpolated from a plot of mole percentage versus peel strength. The films are described in Table 1 and results are shown in Table 2.

### Examples 5-11 and Comparative Examples 1-4 (C1-C4) (Examples 5-11 are Reference Examples)

For Examples 5-11 and C1-C4, coextruded films containing 3 layers were made as described for Examples 2-4 except that the polymers were varied as shown in Table 1. The films are described in Table 1 and results are shown in Table 2.

### Examples 12 and 13 and Comparative Example 5 (C5) (Examples 12 and 13 are Reference Examples)

For Examples 12, 13 and C5, coextruded films containing 3 layers were made as described for Examples 2-4 except that the polymers were varied as shown in Table 1, and instead of stretching biaxially, specimens of the cast webs were stretched uniaxially with sides unconstrained at 155°C at a rate of 100%/second to a stretch ratio of 5.5 in the batch stretching machine. The films are described in Table 1 and results are shown in Table 2.

**Table 1**

| Ex. | Layer A Polyester | Layer B Polyester | SSIP(mol%) | |
|---|---|---|---|---|
| | | | Layer A | Laver B |
| 1 | F | J/K (95/5) | 0 | 0.25 |
| 2 | F | J/K (75/25) | 0 | 1.25 |
| 3 | F | J/K (50/50) | 0 | 2.5 |
| 4 | F | J/K(25/75) | 0 | 3.75 |
| 5 | F | K | 0 | 5 |
| 6 | B | J | 2 | 0 |
| 7 | B | J/K (70/30) | 2 | 1.5 |
| 8 | B | J/K (30/70) | 2 | 3.5 |
| 9 | B | K | 2 | 5 |
| 10 | B | L | 2 | 10 |
| 11 | B | M | 2 | 15 |
| 12 | B | N/J (85/15) | 2 | 0 |
| 13 | F | N/K (85/15) | 0 | 0.75 |
| C1 | F | J | 0 | 0 |
| C2 | A | J | 0 | 0 |
| C3 | F | J/K | 0 | 10 |
| C4 | F | J/K | 0 | 15 |
| C5 | F | N/J (85/15) | 0 | 0 |

**Table 2**

| Ex. | Average Peel Strength | | Water Treatment Test |
|---|---|---|---|
| | Test Method C (g/cm) | Test Method A (N/mm) | |
| 1 | 75 | NM² | clear, good integrity¹ |
| 2 | 87 | .NM | clear, good integrity |
| 3 | 126 | NM | clear, good integrity |
| 4 | >591 | NM | clear, good integrity |
| 5 | 71 | 3.7 | clear, good integrity |
| 6 | >591 | NM | NM |
| 7 | >591 | NM | NM |
| 8 | >591 | NM | NM |
| 9 | >591 | NM | NM |
| 10 | >591 | NM | NM |
| 11 | 42 | NM | NM |
| 12 | 47 | NM | NM |
| 13 | 31 | NM | NM |
| C 1 | 31 | 0.17 | clear, good integrity |
| C2 | >591 | NM | clear, good integrity |
| C3 | 75 | NM | cloudy/hazy, partially swelled |
| C4 | too brittle | NM | very hazy, fell into pieces |
| C5 | 27 | NM | NM |

| | | | |
|---|---|---|---|
| 1) Interpolated from a plot of mol % versus peel strength. 2) not measured | | | |

### Comparative Examples 6 and 7 (C6 and C7)

For C6 and C7, multilayer films were coextruded to contain 450 alternating layers of Polyesters F and J, which were then stretched on a sequential, conventional, film making line having a length orienter and a tenter. Polyester F was delivered by two separate extruders at a total rate of 90.7 kg/hr (200 lbs/hr) to the feedblock and Polyester J was delivered by a third extruder at a rate of 86.2 kg/hr (190 lbs/hr) to the same feedblock. The cast film was stretched in the machine direction in the length orienter to a stretch ratio of about 3.5 and subsequently stretched in the transverse direction in the tenter to a stretch ratio of about 3.5. After preheating and stretching in the first two zones of the tenter, the films were heat set in the third and fourth tenter zones at temperatures shown in Table 4. Film descriptions and results are shown in Tables 3 and 4.

### Examples 14-16 and Comparative Example 8 (C8)

Multilayer films were coextruded and stretched as described for Comparative Examples 6 and 7, except that the polymers and heat set temperatures were varied as shown in Tables 3 and 4. Film descriptions and results are shown in Tables 3 and 4.

### Control

The Control was a single layer biaxially stretched PET film having a thickness of about 120 micrometer (SCOTCHPAR from 3M Co.). Since the monolayer PET film has no internal layer interfaces, the result of this test gives the upper limit for peel strength for a polyester film detectable by this test method. A multilayer film having a peel strength identical to that of the PET monolayer film can be said to have no tendency whatsoever to delaminate within the ability of this test to detect it. The result is summarized in Table 4.

**Table 3**

| Ex. | Layer A Polyester | Layer B Polyester | SSIP(mol%) | | Heat Set Temperature (Zone 3/Zone 4) (°C/°C) |
|---|---|---|---|---|---|
| | | | Layer A | Layer B | |
| 14 | F | K | 0 | 5 | 204/240 |
| 15 | F | K | 0 | 5 | 227/240 |
| 16 | F | K | 0 | 5 | 204/204 |
| C6 | F | J | 0 | 0 | 204/240 |
| C7 | F | J | 0 | 0 | 227/240 |
| C8 | F | K | 0 | 5 | 176/176 |
| Control | PET | --- | 0 | --- | -- |

**Table 4**

| Ex. | Layer B SSIP (mol%) | Avg. Peel Strength¹ (N/mm) | Trans. (%) | Haze (%) | Clarity (%) | Appearance | Environmental Testing² |
|---|---|---|---|---|---|---|---|
| 14 | 5.0 | 3.6 | 88 | 2 | 99.7 | robust, uniform, good flatness | no visible change |
| 15 | 5.0 | 3.7 | 88 | 2 | 99.7 | robust, uniform, good flatness | no visible change |
| 16 | 5.0 | 0.36 | NM | NM | NM | robust, uniform, good flatness | no visible change |
| C6 | 0 | 0.36 | NM³ | NM | NM | robust but non-uniform thickness, baggy when exiting tenter | no visible change |
| C7 | 0 | 2.6 | 88 | 2 | 99.7 | robust but non-uniform thickness, baggy when exiting tenter | no visible change |
| C8 | 5.0 | 0.15 | NM | NM | NM | fragile but uniform, good flatness when exiting tenter | no visible change |
| Con. | - | 4.0 | NM | NM | NM | robust, uniform, good flatness | no visible change |

| | | | | | | | |
|---|---|---|---|---|---|---|---|
| 1) Test Method A 2) 65°C, 95% relative humidity for 1000 hrs. 3) not measured | | | | | | | |

### Examples 12a-e and Comparative Examples C6a-e (Examples 12a-e are Reference Examples)

Specimens of the multilayer film described for Example 12 (after the film was heat set in the third and fourth tenter zones) were subjected to additional heat setting, off-line, by mounting each specimen in a taut frame and holding it in an oven at 240°C for differing lengths of time as shown in Table 5. This same testing was carried out for specimens of the multilayer film described for C6 (after the film was heat set in the third and fourth tenter zones). The resulting specimens were tested and the results are summarized in Table 5.

**Table 5**

| Ex. | Layer B SSIP (mol%) | Additional Heat Set Time (seconds) | Peel Strength¹ |
|---|---|---|---|
| 12a | 5.0 | 0 | B |
| 12b | 5.0 | 10 | B |
| 12c | 5.0 | 20 | B |
| 12d | 5.0 | 30 | A |
| 12e | 5.0 | 40 | A |
| C6a | 0 | 0 | D |
| C6b | 0 | 10 | D |
| C6c | 0 | 20 | D |
| C6d | 0 | 30 | D |
| C6e | 0 | 40 | D |

| | | | |
|---|---|---|---|
| 1) Test Method B | | | |

As shown in Table 6, Polyester B is highly birefringent after unconstrained uniaxial orientation and is comparable to the birefringence of Polyester F.

**Table 6**

| Polyester | Draw Ratio | RI (Machine Direction) | RI (Transverse Direction) | RI (Thickness Direction) | Birefringence , ΔRI¹ |
|---|---|---|---|---|---|
| F | 1x5.5 | 1.831 | 1.572 | 1.570 | 0.26 |
| B | 1x5.5 | 1.826 | 1.572 | 1.571 | 0.26 |

| | | | | | |
|---|---|---|---|---|---|
| 1) RI (Machinc Direction) - RI (Transverse Direction) | | | | | |

For the examples shown in Table 1, the amount of sodium ion present in each of the layers was calculated, and the results are shown in Table 7. A synergistic effect was observed when both layers had sodium ion, for example, by comparison of Examples 2, 6 and 7.

**Table 7**

| Ex. | Layer A Polyester | Layer B Polyester | Na⁺ Conc. (ppm) | | Average Peel Strength, Test Method C (g/cm) |
|---|---|---|---|---|---|
| | | | Layer A | Layer B | |
| 1 | F | J/K (95/5) | 0 | 280 | 41¹ |
| 2 | F | J/K (75/25) | 0 | 1400 | 75 |
| 3 | F | J/K (50/50) | 0 | 2800 | 87 |
| 4 | F | J/K (25/75) | 0 | 4200 | 126 |
| 5 | F | K | 0 | 5650 | 591 |
| 6 | B | J | 1900 | 0 | 71 |
| 7 | B | J/K (70/30) | 1900 | 1400 | 591 |
| 8 | B | J/K (30/70) | 1900 | 3300 | 591 |
| 9 | B | K | 1900 | 5650 | 591 |
| 10 | B | L | 1900 | 1042 | 591 |
| 11 | B | M | 1900 | 1530 | 591 |
| 12 | B | N/J (85/15) | 1900 | 0 | 42 |
| 13 | F | N/K(85/15) | 0 | 720 | 47 |
| C1 | F | J | 0 | 0 | 31 |
| C2 | A | J | 0 | 0 | 31 |
| C3 | F | J/K | 0 | 10 | 591 |
| C4 | F | J/K | 0 | 15 | too brittle |
| C5 | F | N/J (85/15) | 0 | 0 | 27 |

### Example 17

A multi-layer reflective mirror was constructed with first optical layers comprising PEN (polyethylene naphthalate) and second optical layers comprising Polyester O. The PEN and Polyester O were coextruded through a multi-layer melt manifold and multiplier to form 825 alternating first and second optical layers. This multi-layer film also contained two internal and two external protective boundary layers of the same PEN as the first optical layers for a total of 829 layers. In addition, two external skin layers of PEN were coextruded on both sides the optical layer stack. An extruded cast web of the above-construction was then heated in a tentering oven with air at 150°C for 45 seconds and then biaxially oriented at a 3.8x3.7 draw ratio. The resulting 50 micron film was then heat set at 245°C for 10 seconds, and had acceptable interlayer adhesion.

### Example 18

A multi-layer reflective mirror was constructed with first optical layers comprising PET (polyethylene terephthalate) and second optical layers comprising Polyester P. The PET and Polyester P were coextruded through a multi-layer melt manifold and multiplier to form 825 alternating first and second optical layers. This multi-layer film also contained two internal and two external protective boundary layers of the same PET as the first optical layers for a total of 829 layers. In addition, two external skin layers of PET were coextruded on both sides the optical layer stack. An extruded cast web of the above-construction was then heated in a tentering oven with air at 95°C for 45 seconds and then biaxially oriented at a 3.8x3.7 draw ratio. The resulting 50 micron film was then heat set at 240°C for 10 seconds, and had acceptable interlayer adhesion.

### Example 19

The film from Example 15 was laminated using PVC adhesive of about 70-80 micrometers thickness (Transilwrap 3/1 ZZ from Transilwrap Co., Inc.) between two transparent PET sheets (SCOTCHPAR from 3M Co.) each having a thickness of 250 micrometer. The resulting test specimen was about 760 micrometer thick. The laminated specimen was cut to transaction card dimensions (54 mm x 80 mm) in accordance with the ISO/IEC 7810 Standard. The peel strength of the transaction card-sized test specimen was then tested in accordance to ISO/IEC 10373-1 Standard. Excellent peel strength was obtained.

Various modifications and alterations of this invention will be apparent to those skilled in the art without departing from the scope of the invention, and it should be understood that this invention is not limited to the examples and embodiments described herein.

## Claims

1. A multilayer optical film comprising:
alternating layers of first and second optical layers, wherein the multilayer optical film comprises from 50 to 1000 optical layers;
the first optical layer comprising a first polyester, wherein the first polyester comprises first dicarboxylate monomers and first diol monomers, and from 0.25 to less than 10 mol % of the first dicarboxylate monomers have pendant ionic groups, wherein the pendant ionic group comprises a sulfonate, phosphonate, or carboxylate group, or a combination thereof;
the second optical layer comprising a second polyester; and
wherein the first and second optical layers have refractive indices along at least one axis that differ by at least 0.04.

2. The multilayer optical film of claim 1, wherein the first dicarboxylate monomers comprise naphthalene dicarboxylate and a salt of 5-sulfoisophthalate; and the first diol monomers comprise ethylene glycol.

3. The multilayer optical film of claim 1, wherein the first dicarboxylate monomers comprise terephthalate and a salt of 5-sulfoisophthalate; and the first diol monomers comprise ethylene glycol and neopentyl glycol.

4. The multilayer optical film of claim 1, wherein the first dicarboxylate monomers comprise cyclohexane dicarboxylate and a salt of 5-sulfoisophthalate; and the first diol monomers comprise ethylene glycol and cyclohexane dimethanol.

5. The multilayer optical film of claim 1, wherein the second polyester comprises second dicarboxylate monomers and second diol monomers, and from 0.25 to less than 10 mol % of the second dicarboxylate monomers have pendant ionic groups.

6. The multilayer optical film of claim 1, the first optical layer comprising 0.5 wt % or less of a monovalent organic salt.

7. The multilayer optical film of claim 5, the first and second optical layers each having a sodium ion concentration of at least 1000 ppm.

8. The multilayer optical film of claim 1, the multilayer optical film having a haze value of less than 50%, wherein the haze is measured according to ASTM D-1003 using a Hazeguard® instrument from BYK-Gamer USA.

9. A transaction card comprising:
first and second polymer layers each having a thickness of at least 125 µm; and
a multilayer optical film of any of claims 1 to 8 disposed between the first and second polymer layers;
wherein the transaction card has an average transmission of at least 50% from 400 to 700 nm, wherein the transmittance is measured according to ASTM D-1003 using a Hazeguard® instrument from BYK-Garner USA.

10. The transaction card of claim 9, having an average transmission of less than 16% from 800 to 1000 nm.

11. The transaction card of claim 9, having a haze of less than 12%, wherein the haze is measured according to ASTM D-1003 using a Hazeguard® instrument from BYK-Garner USA.

12. The transaction card of claim 9, the first and second polymer layers independently comprising polyvinylchloride, polyethylene terephthalate, polyethylene naphthalate, polycarbonate, polystyrene, styreneacrylonitrile, polymethylmethacrylate, glycol-modified polyethylene terephthalate, copolyester, or a combination thereof.

13. The transaction card of claim 9, comprising a financial transaction card, an identification card, a key card, or a ticket card.

14. A method of making a multilayer optical film of any of claims 1 to 8, the method comprising:
coextruding alternating layers of first and second optical layers;
preheating the coextruded alternating layers to a preheating temperature above the Tg of the first and second optical layers;
stretching the coextruded alternating layers after preheating, such that the first and second optical layers have refractive indices along at least one axis that differ by at least 0.04; and
optionally post-heating the coextruded alternating layers for at least 5 seconds after stretching, wherein post-heating comprises heating at a post-heating temperature of at least 204°C.

## Patentansprüche

1. Mehrschichtiger optischer Film, umfassend:
alternierende Schichten von ersten und zweiten optischen Schichten, wobei der mehrschichtige optische Film 50 bis 1.000 optische Schichten umfasst;
die erste optische Schicht einen ersten Polyester umfasst, wobei der erste Polyester erste Dicarboxylatmonomere und erste Diolmonomere umfasst und von 0,25 bis weniger als 10 Mol-% der ersten Dicarboxylatmonomere ionische Seitengruppen aufweisen, wobei die ionische Seitengruppe eine Sulfonat-, Phosphonat- oder Carboxylatgruppe oder eine Kombination davon umfasst;
die zweite optische Schicht einen zweiten Polyester umfasst; und
wobei die ersten und die zweiten optischen Schichten längs mindestens einer Achse Brechungsindizes aufweisen, die sich mindestens um 0,04 unterscheiden.

2. Mehrschichtiger optischer Film nach Anspruch 1, wobei die ersten Dicarboxylatmonomere Naphthalindicarboxylat und ein Salz von 5-Sulfoisophthalat umfassen; und die ersten Diolmonomere Ethylenglykol umfassen.

3. Mehrschichtiger optischer Film nach Anspruch 1, wobei die ersten Dicarboxylatmonomere Terephthalat und ein Salz von 5-Sulfoisophthalat umfassen; und die ersten Diolmonomere Ethylenglykol und Neopentylglykol umfassen.

4. Mehrschichtiger optischer Film nach Anspruch 1, wobei die ersten Dicarboxylatmonomere Cyclohexandicarboxylat und ein Salz von 5-Sulfoisophthalat umfassen; und die ersten Diolmonomere Ethylenglykol und Cyclohexandimethanol umfassen.

5. Mehrschichtiger optischer Film nach Anspruch 1, wobei der zweite Polyester zweite Dicarboxylatmonomere und zweite Diolmonomere umfasst und von 0,25 bis weniger als 10 Mol-% der zweiten Dicarboxylatmonomere ionische Seitengruppen aufweisen.

6. Mehrschichtiger optischer Film nach Anspruch 1, wobei die erste optische Schicht 0,5 Gew.-% oder weniger eines einwertigen organischen Salzes umfasst.

7. Mehrschichtiger optischer Film nach Anspruch 5, wobei die ersten und die zweiten optischen Schichten jeweils eine Konzentration an Natriumionen von mindestens 1.000 ppm aufweisen.

8. Mehrschichtiger optischer Film nach Anspruch 1, wobei der mehrschichtige optische Film einen Trübungswert von kleiner als 50 % aufweist und die Trübung gemäß ASTM D-1003 unter Benutzung eines Hazeguard®-Instrumentes von BYK-Gardner USA gemessen wird.

9. Transaktionskarte, umfassend:
erste und zweite Polymerschichten, die jeweils eine Dicke von mindestens 125 µm aufweisen; und
einen mehrschichtigen optischen Film nach einem der Ansprüche 1 bis 8, der zwischen den ersten und den zweiten Polymerschichten angeordnet ist;
wobei die Transaktionskarte eine durchschnittliche Transmission von 400 bis 700 nm von mindestens 50 % aufweist, wobei der Transmissionsgrad gemäß ASTM D-1003 unter Benutzung eines Hazeguard®-Instrumentes von BYK-Gardner USA gemessen wird.

10. Transaktionskarte nach Anspruch 9 mit einer durchschnittlichen Transmission von 800 bis 1.000 nm von kleiner als 16 %.

11. Transaktionskarte nach Anspruch 9 mit einer Trübung von kleiner als 12 %, wobei die Trübung gemäß ASTM D-1003 unter Benutzung eines Hazeguard®-Instrumentes von BYK-Gardner USA gemessen wird.

12. Transaktionskarte nach Anspruch 9, wobei die ersten und die zweiten Polymerschichten unabhängig Polyvinylchlorid, Polyethylenterephthalat, Polyethylennaphthalat, Polycarbonat, Polystyrol, Styrolacrylnitril, Polymethylmethacrylat, Glykol-modifiziertes Polyethylenterephthalat, Copolyester oder eine Kombination davon umfassen.

13. Transaktionskarte nach Anspruch 9, umfassend eine Finanztransaktionskarte, eine Ausweiskarte, einen Kartenschlüssel oder eine Ticket-Karte.

14. Verfahren zum Herstellen eines mehrschichtigen optischen Filmes nach einem der Ansprüche 1 bis 8, wobei das Verfahren Folgendes umfasst:
Coextrudieren von alternierenden Schichten von ersten und zweiten optischen Schichten;
Vorwärmen der coextrudierten alternierenden Schichten auf eine Vorwärmtemperatur oberhalb der Tg der ersten und der zweiten optischen Schichten;
Strecken der coextrudierten alternierenden Schichten nach dem Vorwärmen, derart, dass die ersten und die zweiten optischen Schichten längs mindestens einer Achse Brechungsindizes aufweisen, die sich um mindestens 0,04 unterscheiden; und
gegebenenfalls Nachwärmen der coextrudierten alternierenden Schichten fur mindestens 5 Sekunden nach dem Strecken, wobei das Nachwärmen das Erwärmen auf eine Nachwärmtemperatur von mindestens 204 °C umfasst.

## Revendications

1. Film optique multicouche comprenant :
des couches alternées d'une première et d'une deuxième couche optique, le film optique multicouche comprenant de 50 à 1000 couches optiques ;
la première couche optique comprenant un premier polyester, le premier polyester comprenant des premiers monomères de dicarboxylate et des premiers monomères de diol, et de 0,25 à moins de 10 % en moles des premiers monomères de dicarboxylate portant des groupes ioniques latéraux, les groupes ioniques latéraux comprenant un groupe sulfonate, phosphonate ou carboxylate, ou une combinaison de ceux-ci ;
la deuxième couche optique comprenant un deuxième polyester ; et
la première et la deuxième couche optique ayant des indices de réfraction le long d'au moins un axe qui diffèrent d'au moins 0,04.

2. Film optique multicouche selon la revendication 1, dans lequel les premiers monomères de dicarboxylate comprennent du dicarboxylate de naphtalène et un sel de 5-sulfo-isophtalate, et les premiers monomères de diol comprennent de l'éthylène glycol.

3. Film optique multicouche selon la revendication 1, dans lequel les premiers monomères de dicarboxylate comprennent du téréphtalate et un sel de 5-sulfo-isophtalate, et les premiers monomères de diol comprennent de l'éthylène glycol et du néopentylglycol.

4. Film optique multicouche selon la revendication 1, dans lequel les premiers monomères de dicarboxylate comprennent du dicarboxylate de cyclohexane et un sel de 5-sulfo-isophtalate, et les premiers monomères de diol comprennent de l'éthylène glycol et du cyclohexane-diméthanol.

5. Film optique multicouche selon la revendication 1, dans lequel le deuxième polyester comprend des deuxièmes monomères de dicarboxylate et des deuxièmes monomères de diol, et de 0,25 à moins de 10 % en moles des deuxièmes monomères de dicarboxylate portent des groupes ioniques latéraux.

6. Film optique multicouche selon la revendication 1, la première couche optique comprenant 0,5 % en poids ou moins d'un sel organique monovalent.

7. Film optique multicouche selon la revendication 5, la première et la deuxième couche optique contenant chacune une concentration en ions sodium d'au moins 1000 ppm.

8. Film optique multicouche selon la revendication 1, le film optique multicouche ayant une valeur de trouble inférieure à 50 %, le trouble étant mesuré selon la norme ASTM D-1003 en utilisant un instrument Hazeguard^{®} de BYK-Gardner USA.

9. Carte de transaction comprenant :
une première et une deuxième couche polymère ayant chacune une épaisseur d'au moins 125 µm ; et
un film optique multicouche selon l'une quelconque des revendications 1 à 8 disposé entre la première et la deuxième couche polymère ;
la carte de transaction présentant une transmission moyenne d'au moins 50 % de 400 à 700 nm, le facteur de transmission étant mesuré selon la norme ASTM D-1003 en utilisant un instrument Hazeguard^{®} de BYK-Gardner USA.

10. Carte de transaction selon la revendication 9, présentant une transmission moyenne inférieure à 16 % de 800 à 1000 nm.

11. Carte de transaction selon la revendication 9, présentant un trouble inférieur à 12 %, le trouble étant mesuré selon la norme ASTM D-1003 en utilisant un instrument Hazeguard^{®} de BYK-Gardner USA.

12. Carte de transaction selon la revendication 9, la première et la deuxième couche polymère comprenant indépendamment du polychlorure de vinyle, du téréphtalate de polyéthylène, du naphtalate de polyéthylène, du polycarbonate, du polystyrène, du styrène-acrylonitrile, du polyméthacrylate de méthyle, du téréphtalate de polyéthylène modifié au glycol, du copolyester, ou une combinaison de ceux-ci.

13. Carte de transaction selon la revendication 9, comprenant une carte de transaction financière, une carte d'identification, une carte clé ou une carte ticket.

14. Procédé de fabrication d'un film optique multicouche selon l'une quelconque des revendications 1 à 8, le procédé comprenant :
la coextrusion de couches alternées d'une première et d'une deuxième couche optique ;
le préchauffage des couches alternées coextrudées jusqu'à une température de préchauffage supérieure à la Tg de la première et de la deuxième couche optique ;
l'étirage des couches alternées coextrudées après préchauffage, de telle sorte que la première et la deuxième couche optique aient des indices de réfraction le long d'au moins un axe qui diffèrent d'au moins 0,04 ; et
éventuellement, le post-chauffage des couches alternées coextrudées pendant au moins 5 secondes après étirage, le post-chauffage comprenant le chauffage jusqu'à une température de post-chauffage d'au moins 204 °C.
